# EUROPEAN PATENT SPECIFICATION

(11) **EP 0 390 354 B1**
(45) Date of publication and mention of the grant of the patent: **25.01.1995**
(21) Application number: 90302424.8
(22) Date of filing: 07.03.1990
(51) Int. Cl.: H04B 1/40, H04B 1/48

(54) **Apparatus for decreasing the barrier attenuation requirements set on a duplex filter in a digital radio telephone**
Vorrichtung zur Verringerung der Sperrdämpfungsanforderungen eines Duplexfilters in einem digitalen Funktelefon
Dispositif pour réduire les exigences de l'atténuation de blocage imposées à un filtre duplex dans un radiotéléphone numérique

(30) Priority: 29.03.1989 FI 891513
(43) Date of publication of application: 03.10.1990
(73) Proprietor: NOKIA MOBILE PHONES LTD., 24101 Salo (FI)
(72) Inventor: Ikonen, Raimo, SF-25360 Pertteli (FI); Lonka, Pekka, SF-24240 Salo (FI); Mikkola, Pekka, SF-24100 Salo (FI)
(74) Representative: Crawford, Andrew Birkby

(56) References cited:
- EP-A- 0 441 500
- FR-A- 2 371 784
- WIRELESS WORLD, vol. 81, no. 1469, January 1975, page 12; A. LIEBER: "Passivesolid-state antenna switch"

## Description

The invention relates to an apparatus by means of which it is possible to reduce the barrier attenuation requirements set on a duplex filter in a radio telephone.

EP-A-0355973 which was published after the priority date of the present application proposes that in a system based on digital time division multiplexing (TDMA) the rf switch be replaced with a duplex filter which prevents the access of the transmission of the telephone itself to the receiver and the access of a received signal to the transmitter. The filter can be conceived as two separate filters of which one part is between the antenna coupling and the transmitter and the other part between the antenna coupling and the receiver. When high transmission powers are used, for example in a digital GSM system the transmission power is 20 W, high demands are set with respect to attenuation on the filter part between the antenna and the receiver, since the transmission power must not pass to the receiver and possibly break it. As a consequence of the high attenuation requirement, the filter becomes more complex, its size becomes large and its weight increases. This also increases manufacturing costs. The filter in a radio telephone should be as simple and light as possible in spite of the high requirement.

EP-A-0085180 discloses radio communication apparently including an antenna duplexer using a SAW filter which is stated to be very compact and show satisfactory electrical characteristics without requiring any additional circuits.

Wireless World, vol. 81, no. 1469, January 1975 at page 12 discloses a passive solid-state antenna switch for a transceiver. The circuit uses two pairs of silicon diodes, with the diodes of each pair being connected antiparallel to each other. One pair or diodes effectively shorts the receiver input during transmission by being connected across the inputs to the receiver to form a short circuit a quarter wavelength from the junction to the antenna. The other pair disconnects the transmitter during reception.

The present invention provides a radio telephone including a duplex filter and a receiver characterized in that the telephone is a digital telephone and includes a diode limiter disposed between the duplex filter and the receiver for reducing the barrier attenuation requirement of the duplex filter which diode limiter comprises diodes coupled in antiparallel between the signal line and ground, and in that in order to compensate for the capacitance of the diodes and to zero the dc level, an inductance is coupled in parallel with the diodes.

According to the basic idea of the invention, signals which have passed the barrier filter and are too intense for the receiver are limited so that they constitute no risk to the receiver. By limiting the signals after the barrier filter it is possible to reduce the attenuation requirements set on the filter itself, in which case the filter can be made small and simpler than without the limiter. Diodes can be simply used as the limiter.

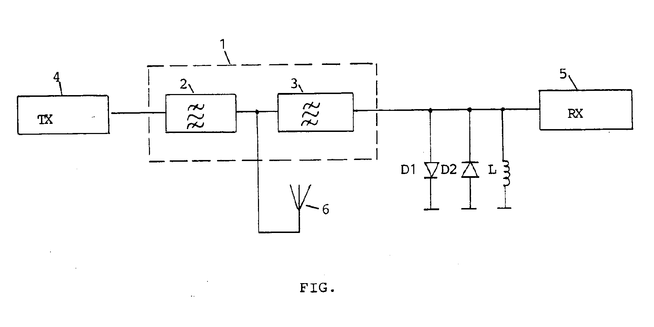

The invention is described below in greater detail with reference to the accompanying drawing.

The figure shows diagrammatically the coupling of the duplex filter in a digital radio telephone to the other blocks of the telephone. The duplex filter 1 has three ports: one port for the transmission signal arriving at the filter, one antenna port, and one port for the receiver. The received signal coming from the antenna 6 travels via the block 3 of the bandpass filter 1 to the receiver 5. Respectively, a signal coming from the transmitter 4 passes via the block 2 of the filter to the antenna 6. For this signal the filter block 3 is seen as a high impedance. As stated above, in practice, as the requirements set on barrier attenuation increase, the structure of the filter becomes more complex and its size increases. In order to be able to maintain the barrier attenuation requirement at a reasonable level, diodes D1 and D2 are coupled in anti-parallel on the signal line between the block 3 and the receiver 5, between the line and the ground of the device. The diodes used can be advantageously Schottky diodes because of their low forward current. Other diodes having a low threshold voltage can also be used. Common silicon diodes having a threshold voltage of approximately 0.7 V are also possible, provided that the first transistor of the receiver can withstand the power passing through the diode limiter. Coil L is also coupled in parallel with the diodes. Its purpose is to compensate, within the frequency range used, for the capacitance, of the diodes and to zero the dc level in order that the diodes should function symmetrically. The diode limiter does not load the transmitter very much, since the block 3 of the duplex filter 1 suitably separates the limiter from the transmitter.

By using a diode limiter according to the invention it is possible, owing to the lower barrier attenuation requirement, to make the duplex filter smaller and simpler than when a diode limiter is not used. In particular, the diode limiter according to the invention is intended for use in a radio telephone system based on digital time division multiplexing (TDMA).

## Claims

1. A radio telephone including a duplex filter (1) and a receiver (5) characterized in that the telephone is a digital telephone and includes a diode limiter (D1, D2) disposed between the duplex filter (1) and the receiver (5) for reducing the barrier attenuation requirement of the duplex filter (1), which diode limiter comprises diodes (D1,D2) coupled in antiparallel between the signal line and ground, and in that in order to compensate for the capacitance of the diodes (D1, D2) and to zero the dc level, an inductance (L) is coupled in parallel with the diodes (D1, D2).

2. A radio telephone according to claim 1, characterized in that the diodes (D1, D2) have a low threshold voltage.

3. A radio telephone according to claim 2, characterized in that the diodes (D1, D2) are Schottky diodes.

## Patentansprüche

1. Ein Funktelefon, das ein Duplexfilter (1) und einen Empfänger (5) einschließt, **dadurch gekennzeichnet**, daß das Telefon ein digitales Telefon ist und eine Diodenbegrenzungseinrichtung (D1, D2) enthält, die zwischen dem Duplexfilter (1) und dem Empfänger (5) zum Verringern der Sperrdämpfungsanforderung des Duplexfilters (1) angeordnet ist, wobei die Diodenbegrenzungseinrichtung Dioden (D1, D2) umfaßt, die antiparallel zwischen der Signalleitung und Masse gekoppelt sind, und daß, um die Kapazität der Dioden (D1, D2) auszugleichen und den Gleichstrompegel auf Null zu bringen, eine Induktivität (L) parallel zu den Dioden (D1, D2) gekoppelt ist.

2. Ein Funktelefon gemäß Anspruch 1, **dadurch gekennzeichnet**, daß die Dioden (D1, D2) eine niedere Schwellenspannung haben.

3. Ein Funktelefon gemäß Anspruch 2, **dadurch gekennzeichnet**, daß die Dioden (D1, D2) Schottky-Dioden sind.

## Revendications

1. Radiotéléphone incluant un filtre duplex (1) et un récepteur (5), caractérisé en ce que le téléphone est un téléphone numérique et comprend un limiteur à diodes (D1, D2) disposé entre le filtre duplex (1) et le récepteur (5) pour réduire le besoin d'atténuation par barrière du filtre duplex (1), lequel limiteur à diodes comprend des diodes (D1, D2) montées tête-bêche entre la ligne de signal et la masse ; et en ce que, pour compenser la capacité des diodes (D1, D2) et pour mettre à zéro le niveau de courant continu, une inductance (L) est connectée en parallèle avec les diodes (D1, D2).

2. Radiotéléphone selon la revendication 1, caractérisé en ce que les diodes (D1, D2) ont une tension de seuil faible.

3. Radiotéléphone selon la revendication 2, caractérisé en ce que les diodes (D1, D2) sont des diodes de Schottky.
